# EUROPÄISCHE PATENTANMELDUNG

(11) **EP 0 846 903 A2**
(43) Veröffentlichungstag der Anmeldung: **10.06.1998**
(21) Anmeldenummer: 97120352.6
(22) Anmeldetag: 20.11.1997
(51) Int. Cl.: F16K 31/60, F16K 35/06

(54) **Abschliessbarer Drehgriff für Oberteile von Ventilen o.dgl.**

(30) Priorität: 07.12.1996 DE 19650937
(71) Anmelder: Schlösser Haustechnik GmbH, 57462 Olpe/Biggesee (DE)
(72) Erfinder: Eckel, Hans Joachim, Dipl.-Ing., 58706 Menden (DE)
(74) Vertreter: Pürckhauer, Rolf, Dipl.-Ing.

(57) **Zusammenfassung**

Es handelt sich um einen abschließbaren Drehgriff (1) für ein Oberteil (2) eines Ventils o. dgl., mit einem auf der Ventilspindel (7) befestigten Spindelmitnehmer (4), der nur in der die Betätigung des Ventils erlaubenden Stellung eines Schließzylinders (6) mit dem Drehgriff (1) formschlüssig gekuppelt und sonst gegenüber dem Drehgriff (1) frei drehbar gelagert ist. Um den Drehgriff (1) kompakt zu gestalten, ist der Schließzylinder (6) achsparallel zur Ventilspindel (7) versetzt in einem Zwischenbauteil (3) angeordnet. Ein Kupplungsbauteil (9), das mit dem Schließzylinder (6) drehfest verbunden ist, greift bei betätigungsbereitem Ventil mit einem bogenförmigen Innenzahnkranz (19) in eine Außenverzahnung (14) des Spindelmitnehmers (4) ein. Der Spindelmitnehmer (4) sitzt drehfest auf der Ventilspindel (7) und ist durch eine Schraube gesichert.

## Beschreibung

Die Erfindung bezieht sich auf einen abschließbaren Drehgriff für Oberteile von Ventilen o.dgl., mit einem auf der Ventilspindel befestigten Spindelmitnehmer, der nur in der die Betätigung des Ventils erlaubenden Stellung eines achsparallelen zur Spindel radial versetzten Schließzylinders mit dem Drehgriff formschlüssig gekuppelt und sonst in dem Drehgriff frei drehbar gelagert ist.

Ein solcher Drehgriff ist beispielsweise aus dem DE-GM 19 40 382 bekannt. Dieser Drehgriff ist in erster Linie zur Verwendung in Industriebereichen o.dgl. vorgesehen und weist daher kein besonderes ästhetisches äußeres Erscheinungsbild auf. Die Einzelteile bestehen hierbei aus Metall, so daß auch einige Bearbeitungsschritte notwendig sind.

Um einen kompakten, nur wenige kostengünstig herstellbare Teile aufweisenden, abschließbaren Drehgriff für Ventil-Oberteile zu schaffen, wurde der Drehgriff nach DE 36 39 306 C2 entwickelt. Da die Teile im wesentlichen aus Kunststoff bestehen und Spritzteile sind, konnten die Herstellkosten relativ gering gehalten werden. Jedoch sind erhebliche Kosten für die Formen der Teile notwendig, die in ihrer Gestaltung noch relativ aufwendig erscheinen. Außerdem benötigt dieser Drehgriff eine ringförmige Bodenplatte, die den Drehgriff nach unten schließt.

Der Erfindung liegt die Aufgabe zugrunde, den zuvor beschriebenen Drehgriff zu einer weiter vereinfachten und kompakten Ausführungsform zu machen.

Diese Aufgabe ist erfindungsgemäß durch die kennzeichnenden Merkmale des Patentanspruchs 1 gelöst.

Zweckmäßige weitere Ausgestaltungen der Erfindung sind in den Unteransprüchen gekennzeichnet.

Der erfindungsgemäße Drehgriff besteht, abgesehen von dem metallischen Schließzylinder mit Schlüssel, aus Kunststoff-Spritzteilen. Die Montage des Drehgriffs kann, abgesehen von der üblichen Sicherungsschraube für den Spindelmitnehmer ohne Werkzeug schnell und einfach erfolgen, und es ist kein unterer Abschluß des Drehgriffs mit einer Bodenplatte erforderlich, da der untere Durchmesser des Drehgriffs besonders klein gehalten werden kann. Der Drehgriff kann somit nicht mit anderen Bauteilen einer Armatur kollidieren, und die Bedienungsperson kann sich nicht die Finger klemmen.

Auch hier gehören zum kompletten Ventil-Oberteil natürlich die üblichen Metallteile, wie die Ventilspindel mit Verschlußteller oder -konus und das zugehörige, auf den Ventilkörper aufschraubbare Spindellager. Diese Teile sind herkömmlicher Bauart und entsprechen den geltenden Normen, soweit festgelegt. Das bedeutet, daß ein herkömmliches Ventil mit dem erfindungsgemäßen Drehgriff für die Abschließbarkeit nachträglich ausgerüstet werden kann.

In der Zeichnung ist ein Ausführungsbeispiel der Erfindung dargestellt. Dabei zeigt
- Fig. 1: ein Ventil-Oberteil mit dem axial geschnittenen erfindungsgemäßen Drehgriff,
- Fig. 2: eine durchsichtig gezeichnete Draufsicht auf den Drehgriff,

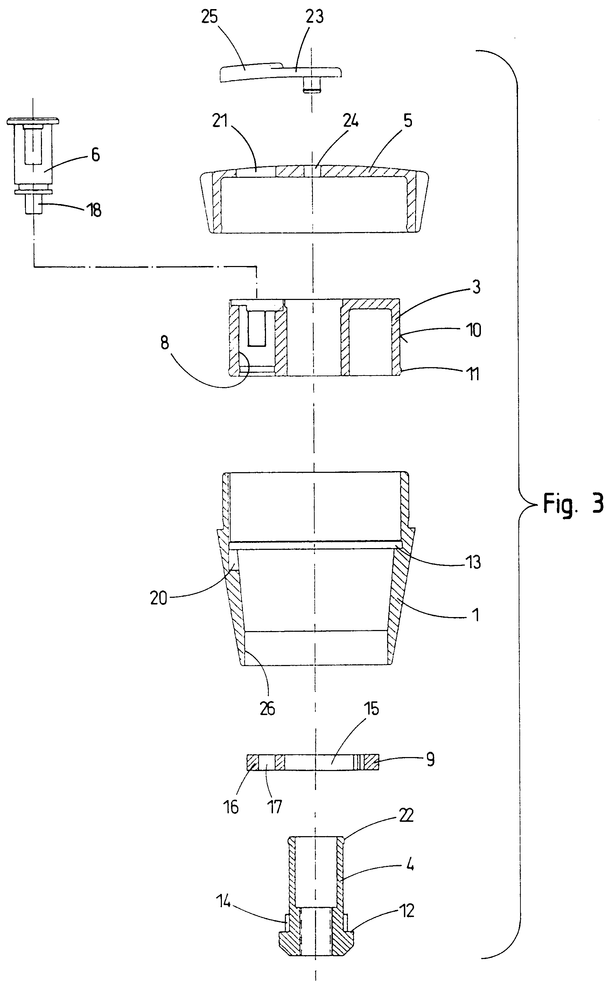

- Fig. 3: eine Sprengdarstellung der Einzelteile des Drehgriffs und
- Fig. 4: in zwei Ansichten das Montagesiegel.

Ein abschließbarer Drehgriff 1 für ein Oberteil 2 von Ventilen o.dgl. weist einen glockenförmigen Drehgriff 1, ein Zwischenbauteil 3, einen Spindelmitnehmer 4 und eine Abdeckkappe 5 auf. Alle diese Teile sind Kunststoff-Spritzteile und können ohne Werkzeug zusammengesetzt werden. Dies gilt auch für das Einsetzen eines Schließzylinders 6 in eine entsprechende, achsparallel zur Ventilspindel 7 radial versetzte Bohrung 8 des Zwischenbauteils 3, das bei Nichtgebrauch des Ventils relativ zum Spindelmitnehmer 4 mit einer gewissen beabsichtigten Reibung (wird später noch näher erläutert) drehbar ist, wobei der Schließzylinder 6 beim Einstecken in der Bohrung 8 unlösbar einrastet. Ein Kupplungsbauteil 9 ist zwischen dem Zwischenbauteil 3 und einer Schulter 12 des Spindelmitnehmers 4 axial gehalten.

Das Zwischenbauteil 3 weist an seinem äußeren Umfang 10 einen umlaufenden Wulst 11 auf, auf dem der Drehgriff 1 mit einer Innenumfangsnut 13, in die der Wulst 11 eingerastet ist, bei abgeschlossenem Ventil-Oberteil 2 frei drehbar gelagert ist. Die Anordnung des Wulstes 11 und der Umfangsnut 13 kann auch umgekehrt so sein, daß das Zwischenbauteil 3 an seinem äußeren Umfang 10 die Umfangsnut aufweist, in der dann der nach innen vorstehende Wulst des Drehgriffs 1 unlösbar einrastet und frei drehbar gelagert ist.

Auf den Drehgriff 1 wird die Abdeckkappe 5 fabrikseitig drehfest und unlösbar aufgesetzt, nachdem alle übrigen Teile 3, 4, 5, 6 in den Drehgriff 1 eingesetzt worden sind.

Wenn der Drehgriff 1 abgeschlossen, d.h. frei drehbar ist, und der Schlüssel aus dem Schließzylinder 6 herausgezogen ist, bildet nach dem Verdrehen des Drehgriffs 1, d.h. wenn die Bohrung 8 von dem Schließzylinder 6 weggedreht ist, der geschlossene Teil der Oberseite des Drehgriffs 1 über dem Schließzylinder 6 selbst einen Wetterschutz für diesen.

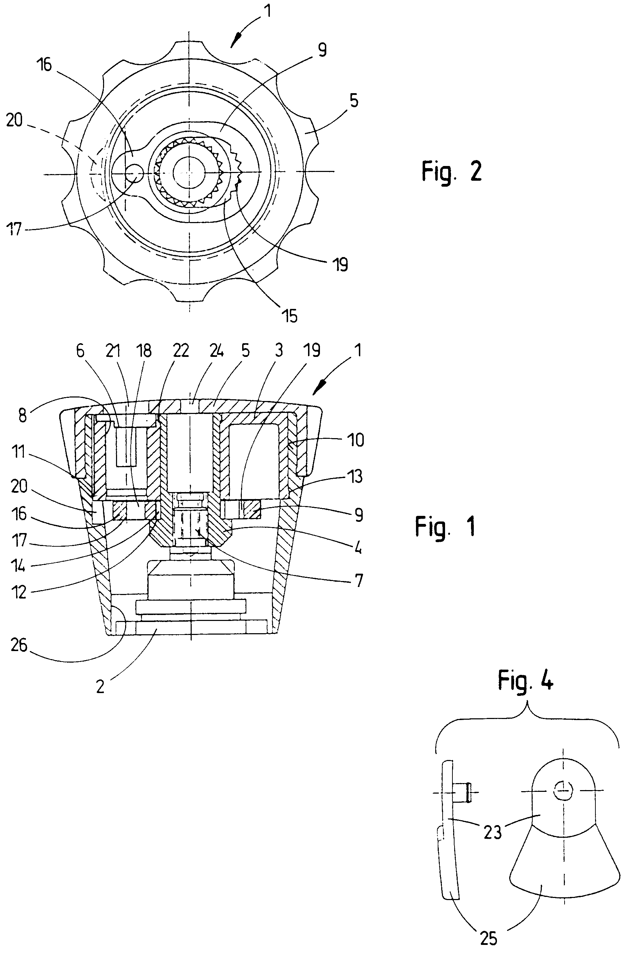

Der Spindelmitnehmer 4 weist unmittelbar über der Schulter 12 eine Außenverzahnung 14 auf. Wie deutlich Fig. 2 erkennen läßt, weist das Kupplungsbauteil 9 eine langrunde Aussparung 15, auf, mit der es den Spindelmitnehmer 4 bei nicht betätigungsbereitem Ventil frei umgibt. Das Kupplungsbauteil 9 ist mit einer einstückig angeformten Öse 16 versehen, in deren Bohrung 17 ein exzentrisch angeordneter Zapfen 18 des Schließzylinders 6 ständig eingreift. Beim Betätigen des Schließzylinders 6 mit einem Schlüssel wird das Kupplungsbauteil 9 radial verschoben (nach links in Fig. 1), so daß ein bogenförmiger Innenzahnkranz 19 in der Aussparung 15 des Kupplungsbauteils in die Außenverzahnung 14 des Spindelmitnehmers 4 eingreift, wobei die Öse 16 in eine bogenförmige Ausnehmung 20 in der Innenseite des Drehgriffs 1 ausweicht und dadurch eine zusätzliche formschlüssige Kupplung des Drehgriffs 1 mit dem Spindelmitnehmer 4 bildet.

Bei abgeschlossenem Ventil, d.h. wenn bei Nichtgebrauch desselben das Kupplungsbauteil 9 außer Eingriff mit dem Spindelmitnehmer 4 steht, wie in Fig. 1 dargestellt, ist der Drehgriff 1 auf dem Zwischenbauteil 3 frei drehbar. Damit aber eine Bohrung 21 in der Abdeckkappe 5 des Drehgriffs 1 zum Aufschließen des Schließzylinders 6 deckungsgleich über diesen gebracht werden kann, darf sich beim Drehen des Drehgriffs 1 das Zwischenbauteil 3 bei diesem Vorgang noch nicht mitdrehen. Zu diesem Zweck ist zwischen Spindelmitnehmer 4 und Zwischenbauteil 3, die beide durch eine clipsartige Raste 22 axial miteinander fixiert sind, herstellungsmäßig eine größere Reibung oder ein O-Ring vorgesehen, der die Reibung erhöht, d.h. bei abgeschlossenem Ventil läßt sich der Drehgriff 1 auf dem Zwischenbauteil 3 leichter drehen als letzteres auf dem Spindelmitnehmer 4.

Sollte jemand versuchen, durch Einstecken eines Gegenstandes in den Schlitz für den Schlüssel den Drehgriff 1 mit dem Schließzylinder 6 zu kuppeln, so verhindert das dann immer noch außer Eingriff befindliche Kupplungsbauteil 9 eine Betätigung des Ventils.

Der gesamte Bausatz aus Drehgriff 1 mit eingestecktem Schließzylinder 6, Spindelmitnehmer 4, Zwischenbauteil 3 und Kupplungsbauteil 9 wird komplett geliefert, und zwar mit der dann fest aufgesetzten Abdeckkappe 5. Ein ebenfalls aus Kunststoff bestehendes Montagesiegel 23 (siehe auch Fig. 4) wird separat beigefügt, da dieses erst nach dem Festschrauben des Bausatzes auf der Ventilspindel 7 unlösbar in eine Mittelbohrung 24 der Abdeckkappe 5 des Drehgriffs 1 eingerastet wird. Damit ist die Befestigungsschraube nur noch nach Zerstörung des Montagesiegels 23 zugänglich. Ein lappenförmiger Ansatz 25 des Montagesiegels 23 dient zum Aufbringen des Firmenlogos und kann auch über die Bohrung 21 als zusätzlicher Schutz gedreht werden.

Der Drehgriff 1 umgibt mit einem innen zylindrischen Teilstück 26 das Oberteil 2 des Ventils, ziemlich eng, aber frei, so daß eine ringförmige Bodenplatte für den unteren Abschluß des Drehgriffs 1 nicht erforderlich ist.

Es ist selbstverständlich, daß der beschriebene abschließbare Drehgriff 1 für praktisch alle Arten von Ventilen o.dgl. verwendbar ist. Auch eine Verwendung für Heizungsregulierventile ist möglich.

## Patentansprüche

1. Abschließbarer Drehgriff für Oberteile von Ventilen o.dgl., mit einem auf der Ventilspindel befestigten Spindelmitnehmer, der nur in der die Betätigung des Ventils erlaubenden Stellung eines achsparallel zur Spindel radial versetzten Schließzylinders mit dem Drehgriff formschlüssig gekuppelt und sonst in dem Drehgriff frei drehbar gelagert ist, gekennzeichnet durch folgende Merkmale:
- der Schließzylinder (6) sitzt in einem gegenüber dem Drehgriff (1) leicht und gegenüber dem Spindelmitnehmer (4) schwerer drehbaren Zwischenbauteil (3);
- zwischen dem Zwischenbauteil (3) und einer Schulter (12) des Spindelmitnehmers (4) ist ein Kupplungsbauteil (9) axial gehalten;
- das Kupplungsbauteil (9) umgibt den Spindelmitnehmer (4) mit einer langrunden Aussparung (15) und ist mit einer Bohrung (17) einer einstückig angeformten Öse (16) mit einem Zapfen (18) des Schließzylinders (6) ständig gekuppelt;
- der Spindelmitnehmer (4) weist oberhalb seiner Schulter (12) eine Außenverzahnung (14) auf, in die bei betätigungsbereitem Ventil ein der Öse (16) gegenüberliegender bogenförmiger Innenzahnkranz (19) eingreift.

2. Drehgriff nach Anspruch 1 dadurch gekennzeichnet, daß eine Abdeckkappe (5) des Drehgriffs (1) eine durch Drehen des Drehgriffs (1) gegenüber dem Zwischenbauteil (3) in Flucht mit dem Schließzylinder (6) zu bringende Bohrung (21) aufweist und daß in der Innenseite des Drehgriffs (1) eine bogenförmige Ausnehmung (20) zur Aufnahme der Öse (16) des Kupplungsbauteils (9) bei betätigungsbereitem Ventil vorgesehen ist.

3. Drehgriff nach Anspruch 1 oder 2, dadurch gekennzeichnet, daß er mit einem unteren innen zylindrischen Teilstück (26) das Ventil-Oberteil (2) mit geringem Ringabstand frei umgibt.

4. Drehgriff nach einem der Ansprüche 1 bis 3, gekennzeichnet durch ein Montagesiegel (23), das mit einem Zapfen in eine Mittelbohrung (24) des Drehgriffs (1) unlösbar, aber drehbar einrastbar ist und einen lappenartigen Ansatz (25) aufweist, der über die Bohrung (21) der Abdeckkappe (5) bei Nichtgebrauch des Ventils schwenkbar ist.
